# EUROPEAN PATENT APPLICATION

(11) **EP 2 399 700 A1**
(43) Date of publication of application: **28.12.2011**
(21) Application number: 09840355.3
(22) Date of filing: 20.02.2009
(51) Int. Cl.: B23G 5/20, B23B 51/08

(54) **TAP WITH DRILL**

(71) Applicant: OSG Corporation, Aichi 442-0005 (JP); Toyota Jidosha Kabushiki Kaisha, Toyota-shi, Aichi 471-8571 (JP)
(72) Inventor: TAKAGI, Akira, Toyokawa-shi Aichi 441-1231 (JP); NOJIRI, Masatoshi, Toyokawa-shi Aichi 441-1231 (JP); MASUDA, Norihiro, Toyokawa-shi Aichi 441-1231 (JP); OTA, Tomoyasu, Toyota-shi Aichi 471-8571 (JP); NISHI, Toshiyuki, Toyota-shi Aichi 471-8571 (JP)
(74) Representative: TBK
(86) International application number: PCT/JP2009/053080
(87) International publication number: WO 2010/095249

(57) **Abstract**

Disclosed is a tap with a drill wherein three drill blades (26) and three threading edges (24) are respectively provided, three oil holes (28) are provided to penetrate in the axial direction, the core diameter (W) is set in a range of 0.25Dt-0.33Dt, a chip discharge groove (22) is provided with a negative land (22a) swelling into the groove, and since both the radial rake angle (ϕ1) at the outer circumference of the drill blade (26) and the radial rake angle (ϕ2) of the threading edge (24) are negative, a female screw (52) can be continuously cut practically while a rough hole (50) is cut under a state of being decentered from a hole-as-cast (46) by synergistic effect thereof even if the pressure of cutting fluid being supplied through the oil hole (28) is as low as 2 MPa or less.

## Description

### FIELD OF THE INVENTION

This invention relates to a tap with drill and, more particularly, to a tap with drill preferably used when cutting an internal thread under a state decentered from a hole-as-cast while supplying cutting oil to a tool end by means of an oil hole.

### BACKGROUND OF THE INVENTION

It is known a tap with drill including: (a) a drill portion including a plurality of chip discharge grooves, formed about a center axis "O" and fluted in the same direction as a thread of an internal thread to be cut, and the drill portion having drill blades for cutting a prepared hole, formed in areas at which the chip discharge grooves are opened to a tool end; (b) a tap portion for cutting the internal thread on an inner circumferential surface of the prepared hole formed by the drill blades, including an external thread corresponding to the internal thread to be formed, and thread cutting edges formed along the chip discharge grooves to be contiguous with the drill portion in a way to split the external thread, the tap portion being disposed concentrically with the drill portion; and (c) spiral oil holes integrally formed on a coaxial relationship and longitudinally extending through the tap portion and the drill portion so as to open at relief surfaces of the drill blades (see Patent Publication 1). With such a tap with drill, synchronized driving of the tap with drill is executed at a rotating speed and a feed rate for forward movement by one lead of an internal thread to be cut per one revolution during which drill blades cut a prepared hole with thread cutting blades consecutively cutting the internal thread on an inner circumferential wall of the prepared hole in an efficiency.
Patent Publication 1: Japanese Patent Application Publication No. H10-100020

### DISCLOSURE OF THE INVENTION

### ISSUES TO BE SOLVED BY THE INVENTION

Though not yet known in the art, meanwhile, it has been considered that the internal thread is cut on a bottomed hole-as-cast formed in a cast metal by using such a tap with drill. That is, the hole-as-cast is poor in dimensional precision and positional precision owing to adverse affects arising from solidification and contraction, etc., occurred during casting. This makes it difficult to cut and form the internal thread at a high positional precision by tapping the hole-as-cast intact with the use of a tap. Therefore, the hole-as-cast is formed in a smaller size and the tap with drill is used to cut the prepared hole in size completely covering the hole-as-cast with a tapping center placed at a position decentered from the center of the hole-as-cast while cutting the internal thread.

However, when cutting the internal thread while cutting the prepared hole under the state decentered from the hole-as-cast in such a way, a load acts on the tool in a lateral direction, resulting in issues with likelihood of causing fracture of the tool and damages to the drill blades and the thread cutting blades. Particularly, since the feed rate per one revolution becomes greater than that experienced by usual drilling work, chips become thickened with a resultant increase in a rate of discharge. Thus, the tap with drill of the usual two blades is likely to easily suffer the clogging with ships followed by the occurrence of fracture of the cutting blades, etc., and damages to the tool during cutting work or when taking the tool out of the workpiece in reverse rotation subsequent to the completion of cutting work. Thus, it is difficult to obtain sufficient degree of durability. The provision of the three blades allows the chips to be thinned with a resultant effect of causing the chips to be dispersed in the three chip discharge grooves. This improves chip discharging performance, while increasing the core thickness with resultant increases in rigidity and strength of tool. Even with such a structure, however, no durability can be necessarily and adequately satisfied with the occurrence of fractures of the drill blades and the cutting edges caused by chip biting. An attempt may be taken into consideration to allow a large amount of cutting oil to be supplied through the oil hole to force out the chips in discharge. However, increases of the oil holes in diameter results in drop in rigidity and strength of the tool and, in addition, a specified device is needed for increasing the oil supply pressure.

The present invention has been completed with the above view in mind and has an object to provide a tool having durability (tool life) that can be satisfied in practice with effects of suppressing fractures of drill blades and thread cutting edges and damage to the tool or the like with no need for a supply pressure of cutting oil to increase to some higher level even when cutting a prepared hole under a state decentered from a hole-as-cast while cutting an internal thread in a contiguous fashion.

### Means for Solving the Problem

The object indicated above can be achieved according to a first aspect of the present invention, which provides a tap with drill including: (a) a drill portion including a plurality of chip discharge grooves, formed about a center axis "O" and fluted in the same direction as a thread of an internal thread to be cut, and the drill portion having drill blades for cutting a prepared hole, formed in areas at which the chip discharge grooves are opened to a tool end; (b) a tap portion for cutting the internal thread on an inner circumferential surface of the prepared hole formed by the drill blades, including an external thread corresponding to the internal thread to be formed, and thread cutting edges formed along the chip discharge grooves to be contiguous with the drill portion in a way to split the external thread, the tap portion being integrally disposed concentrically with the drill portion; and (c) oil holes integrally formed on a coaxial relationship and longitudinally extending through the tap portion and the drill portion so as to open at relief surfaces of the drill blades; (d) the chip discharge grooves being formed in three at equiangular intervals about the center axis "O"; the drill blades and the thread cutting edges include three blades formed along the chip discharge grooves, respectively; and the oil holes are helically formed in three with the same leads as the chip discharge grooves and opened at the relief surfaces of the drill blades, respectively; (e) the chip discharge grooves straddling the drill portion and the tap portion in fixed groove sectional shapes and having negative lands swelled into grooves such that, in a bottom view when viewed from the tool end, both of radial rake angles ϕ1 of outer circumferential portions of the drill blades and radial rake angles ϕ2 of the thread cutting edges in cross section perpendicular to the center axis "O" become negative; and (f) the tool end having a core thickness W falling in a value ranging from 0.25Dt to 0.33Dt with respect to a tap diameter Dt representing an outer diameter of the tap portion.

The object indicated above can be achieved according to a second aspect of the present invention, which provides the tap with drill according to the first aspect, wherein: (a) the chip discharge grooves include concaved circular arc contour portions extending to be contiguous with the negative lands and smoothly concaved in directions opposite to a tool rotating direction in a cross section perpendicular to the center axis "O"; and (b) the drill blades have areas, closer to the center axis "O" than negative angular portions in which the radial rake angles ϕ1, defined by the negative lands on the bottom view as viewed from the tool end, become negative, are formed in concaved circular arc contours smoothly concaved in directions opposite to the tool rotating direction in association with the concaved circular arc contour portions of the chip discharge grooves.

The object indicated above can be achieved according to a third aspect of the present invention, which provides the tap with drill according to the first or second aspect, wherein: the chip discharge grooves have wall surfaces formed in convexed circular arc contours smoothly swelled into grooves on heel side.

The object indicated above can be achieved according to a fourth aspect of the present invention, which provides the tap with drill according to any one of the first to third aspects, wherein: the oil holes have a diameter "d" equal to or less than 1mm.

The object indicated above can be achieved according to a fifth aspect of the present invention, which provides the tap with drill according to any one of the first to fourth aspects, wherein: the tap with drill is applied for performing cutting work on a bottomed hole-as-cast formed in a cast metal and smaller in diameter than a diameter of the prepared hole corresponding to an outer diameter of the drill blades under which the blind hole is cut in size completely covering the hole-as-cast with a center on a tapping center S2 in position decentered from a center S1 of the hole-as-cast while forming an internal thread.

### Advantages of the Invention

According to the taps with drill of the present invention, for instance, as in the fifth invention, the prepared hole was cut by the drill blades under a condition decentered from the hole-as-cast and, in consecutive sequence, the internal thread was cut by the thread cutting edges. When this takes place, even if the oil supply pressure of cutting oil, supplied from the oil holes, were lowered to be, for example, equal to or less than 2MPa, chips can be favorably evacuated via the chip discharge grooves. This results in improvement of chip clogging effects, while suppressing the occurrence of fractures of the drill blades and the thread cutting edges and damage to the tool or the like with a resultant capability of obtaining durability (tool life) that can be satisfactory in actual practice.

That is, the drill blades and the thread cutting edges are comprised of three blades provided in three pieces, respectively. This allows chips to be dispersed in three chip discharge grooves with resultant improvement in chip evacuating performance. In addition, the core thickness W is smaller than that of the tap to fall in a value ranging from 0.25Dt to 0.33Dt but greater than a usual drill of two blades. This ensures a predetermined rigidity and strength while further improving chip evacuating performance. Moreover, with the three oil holes formed in an axial direction so as to open at the relief surfaces of the three drill blades respectively, the oil holes are capable of increasing an overall flowing sectional area ensuring the predetermined rigidity and strength of the tool. This enables a large amount of cutting oil to be supplied even in the presence of an oil supply pressure remained in a relatively low level and, in this respect, chip evacuating performance can be improved. In addition, the chip discharge grooves are formed with the negative lands swelled into the respective grooves and all of the radial rake angle ϕ1 of the outer circumferences of the drill blades and the radial rake angle ϕ2 of the thread cutting edges are made negative with resultant increases in cutting blade strengths of the drill blades and the thread cutting edges. Thus, owing to such synergy effects, it is conceived that even if cutting oil is lowered in supply pressure to be equal to or less than 2MPa as mentioned above, the prepared hole can be cut in a decentered state with respect to the hole-as-cast and, in consecutive step, the internal thread can be cut in practice.

According to the second aspect of the invention, the chip discharge grooves have the concaved circular arc contours. The concaved circular arc contours are contiguous with the negative lands, respectively, and smoothly concaved in directions opposite to the tool rotating direction. In contrast, the drill blades have the concaved circular arc contours, formed in areas closer to the center axis "O" than the negative angle portions formed by the negative lands, which are smoothly concaved in directions opposite to the tool rotating direction. This facilitates the curling of the chips to curl to be easily fragmented with resultant improvement in chip evacuating performance. In addition, the drill blades have elongated cutting edges longer in length than straight cutting edges with a resultant effect of dispersing cutting load. This improves durability of the drill blades and the drill blades, having a relatively large feed rate per one revolution, comes to an effect of further appropriately cutting the prepared hole.

According to the third aspect of the invention, the chip discharge grooves have the heel-facing wall surfaces formed in the convexed circular arc contours smoothly swelled into the respective grooves. This ensures chip rooms (flowing sectional areas) for evacuating the chips and increases rigidity and strength of the lands of the drill portion and the tap portion, while suppressing the occurrence of breakdown of the heel portions during a motion to extract the tool upon reversely rotating the same after completed work on the internal thread.

According to the fourth aspect of the invention, the oil holes have the diameter "d" not greater than 1mm, it becomes possible to increase the overall amount of cutting oil to be supplied through the three oil holes while enhancing predetermined tool rigidity and strength.

### BRIEF DESCRIPTION OF THE DRAWINGS

FIG. 1 depicts views showing a tap with drill of one embodiment according to the present invention; FIG. 1(a) is a schematic front view; FIG. 1(b) is an end view as viewed from a shank; and FIG. 1(c) is an enlarged end view of a drill end portion as viewed from a leading end.
FIG. 2 depicts enlarged views of the tap with drill shown in FIGS. 1(a) to 1(c) in cross section perpendicular to the center axis "O"; FIG. 2(a) is a fragmentary view in an arrow IIA-IIA in FIG. 1(a); and FIG. 2(b) is a fragmentary view in an arrow IIB-IIB in FIG. 1(a).
FIG. 3 is a view illustrating a machining device used for cutting an internal thread under a state decentered from a hole-as-cast with the use of the tap with drill shown in FIG. 1.
FIG. 4 depicts views illustrating processing cycles executed when cutting the internal thread in the holes-as-cast by using the machining device shown in FIG. 3; FIG. 4(a) is a cross sectional view showing a processing cycle for vertical movements; FIG. 4(b) is a cross sectional view showing a guide hole formed in a drilling cycle; and FIG. 4(c) is a cross sectional view showing an internal thread formed in a tapping cycle.
FIG. 5 is a view illustrating test pieces No. 1 to No. 8 of eight kinds used when checking tapping performance.
FIG. 6 depicts cross sectional views illustrating those of the test pieces shown in FIG. 5 which have tap grooves formed in groove shapes and corresponds to FIG. 2.
FIG. 7 is a view, illustrating a test method used when checking tapping performance with the use of the test pieces shown in FIG. 5, which is a plan view showing the relationship between a prepared hole and a tapping position.
FIG. 8 is a graph showing cutting torques (maximum torques) in comparison obtained when consecutively conducting tapping on five holes upon using the test pieces shown in FIG. 5.
FIG. 9 depicts views showing waveforms of cutting torques in comparison obtained when consecutively performing tapping on the five holes upon using the test pieces shown in FIG. 5.
FIG. 10 depicts views illustrating results on checking positional displacements and inclinations of internal threads in a first hole and a fifth hole when performing tapping for five holes continuously for the test pieces No. 6 to No. 8 shown in FIG. 5.

### NOMENCLATURE OF ELEMENTS

10: tap with drill 12: drill portion 14: tap portion 22: chip discharge grooves 22a: negative lands 22b: concaved circular arc contour portion 22c: heel-facing wall surfaces 24: thread cutting edges 26: drill blades 28: oil hole 44: workpiece (cast) 46: hole-as-cast 50: prepared hole 52: internal thread O: center axis Dt: tap diameter Dd: drill diameter d: diameter of oil hole ϕ1: radial rake angle of drill blade ϕ2: radial rake angle of thread cutting edge

### BEST MODE FOR CARRYING OUT THE INVENTION

A tap with drill of the present invention is preferably used when cutting a prepared hole in a bottomed hole-as-cast, formed in a cast metal to be smaller in diameter than diameter of prepared hole, i.e., an outer diameter of drill blades, in size completely covering the hole-as-cast with a center on a tapping center S2 placed at a position decentered from a center S1 of the hole-as-cast, while cutting an internal thread. This tool can also be used when cutting an internal thread in a workpiece made of other materials than cast metal. Also, this tool can be used when cutting a blind hole from the beginning, using drill blades in a workpiece in which no hole such as a hole-as-cast or the like is provided, while cutting an internal thread.

The tap with drill of the present invention is able to preferably cut an internal thread merely by supplying a tool end portion with cutting oil through oil holes under an oil supply pressure equal to or less than, for instance, 2MPa. This tool can be further able to cut the internal thread with cutting oil being supplied under a pressure higher than 2MPa depending on cutting conditions.

The present invention may be further applied to a tap with drill of any type to be used for a clockwise thread and a counterclockwise thread. When used for the clockwise thread, chip discharge grooves for the clockwise thread are provided; and when used for the counterclockwise thread, chip discharge grooves for counterclockwise thread are provided; wherein in any case, chips are discharged toward a shank. The chip discharge grooves have fluted angles suitably falling in a value ranging from, for instance, 20° to 50°.

Although cemented carbide may be preferably adopted as material of the tool, it may be possible to employ other hard tool materials that has been used in the related art. A drill portion and a tap portion may be preferably applied with coating such as hard films like DLC (Diamond-like Carbon), TiN, TiCN and TiAIN or the like.

The radial rake angle ϕ1 of the drill blades and the radial rake angles ϕ2 of the thread cutting edges are substantially equal although they are slightly different depending on such as differences in an angle of the leading end of the drill and differences in the diametrical dimensions of the drill portion and the tap portion. When the radial rake angles ϕ1 and ϕ2 fall in negative angles equal to or greater than -20°, cutting resistance and thrust resistance increase with resultant drop in sharp cutting performance. Consequently, they both are preferable to be not smaller than -20°.

In a bottom view of the tool as viewed from a tool end, the drill blades have negative angle portions each in a range of E1, with radial rake angles ϕ1 being negative, which preferably fall in a range extending from an outer circumferential corner to be equal to or less than 0.1Dd with respect to a drill diameter Dd representing a diameter of the drill portion. If the negative angular range E1 exceeds 0.1Dd, then, cutting resistance and thrust resistance increase with resultant drop in sharp cutting performance. Although the drill blades may be formed in contours suitably determined in the negative angle range E1 and may have nearly straight shapes as viewed in a bottom view, the drill blades, the drill blades may be formed in shapes curved in convexed contours in a tool rotating direction such that the radial rake angles ϕ1 gradually increase (negative→0°) in areas from the outer circumferential corners to inside areas (toward a leading end). Depending on the contours of the drill blades, shapes of negative lands, swelled into the respective grooves, are suitably determined. The negative angular range E1 represents a straight distance from the outer circumferential corner to the center axis "O". Thread cutting edges have rake angels in a negative angular range E2 that are greater than the negative angular range E1 of the drill blades by a value in which a tap diameter Dt is greater than the drill diameter Dd.

A core thickness W represents a groove root diameter of each chip discharge groove at a leading end portion of the tool. Although the chip discharge grooves may be formed with the same fixed groove root diameter as the core diameter W in an entire length of the chip discharge groove, the chip discharge grooves may be formed so as to provide back tapers in which the groove root diameter gradually decreases toward the shank at a fixed gradient. If the core thickness W is greater than 0.33Dt with respect to the tap diameter Dt, then, a drop occurs in chip discharging performance. In contrast, if the core thickness W is less than 0.25Dt, then, deteriorations occur in rigidity and strength of the tool. Thus, the core thickness W is determined to fall in a value ranging from 0.25Dt to 0.33Dt.

The drill blades Dd, representing a dimension in diameter of the drill portion, are made to have the nearly same dimension as an inner diameter of the internal thread to be cut, i.e., the nearly same dimension as a root diameter of an external thread of the tap portion. If the drill diameter Dd is greater than the root diameter of the external thread, then, the drill blades cut the inner diameter of the internal thread. In addition, if the drill diameter Dd is less than the root diameter of the external thread, then, root portions of the thread cutting edges cut the inner diameter of the internal thread. This allows total cutting work to be executed by the thread cutting edges covering franks and ridges of the internal thread. Each may be applied for the present invention.

According to a second invention, the drill blades have areas, closer to the center axis "O" than the negative angular portions, which are formed in concaved circular arc contours smoothly concaved into areas opposite to the tool rotating direction when viewed from a bottom. The concaved circular arc contours have radii properly falling in a value ranging from 0.19Dd to 1.1 Dd for example. Further, no need necessarily arises for the circular arcs to have fixed radii and, instead, the circular arcs may be continuously varied in radius of curvature. Furthermore, thinning blades may be preferably provided so as to reach the vicinity of the center axis "O" to be smoothly connected to the concaved circular arc contours. When implementing the first invention, various modes may be adopted including an alternative or the like in which the drill blades are formed in straight shapes by thinning so as to extend from the negative angular portions, formed by the negative lands, to the center axis "O" without providing the concaved circular arc contours.

According to a third invention, the chip discharge grooves have wall surfaces facing heels and formed in convexed circular arc contours smoothly swelled into the respective grooves. No need necessarily arises for the circular arcs to have fixed radii and, instead, the circular arcs may be continuously varied in radius of curvature. When implementing other inventions, various modes may be possible including an alternative or the like in which the wall surfaces are formed in the same concaved circular arc contours as usual grooves.

According to a fourth invention, an oil hole has a diameter equal to or less than 1mm. In view of ensuring an amount of supplying cutting oil, however, this diameter may properly fall in a value ranging from 0.6mm to 1.0mm. In implementing the other inventions, it may be possible to form an oil hole having a diameter greater than 1.0mm in consideration of a size of the tap diameter Dt and rigidity and strength, etc., of the tool. Three oil holes may be independently provided over respective entire lengths, thereby supplying cutting oil in a flowing sectional area of a total sum of the three oil holes.

With the tap with drill of the present invention, a prepared hole is cut in a workpiece provided with a bottomed blind hole like a hole-as-cast or the like while cutting an internal thread. In this case, a drill length L1 between a front end of the tap portion and a leading end of the drill portion may preferably fall in a value equal to or less than 1Dt with respect to the tap diameter Dt. A tap with drill, designed for cutting, for instance, an internal thread of M8, may have a drill length L1 equal to or less than 8mm and the drill length may be equal to or less than a value in the order of 6mm.

Using the tap with drill of the present invention, the prepared hole is cut in size, completely covering the bottomed hole-as-cast and smaller in diameter than the prepared hole formed in cast metal and representing the outer diameter of the drill blades, with a center on the tapping center S2 placed at a position decentered from the center S1 of the hole-as-cast while internal thread is cut. Such work may be preferably conducted including: (a) a guide hole forming step for cutting a guide hole with the drill blades upon driving the tap with drill at a rotational speed and a feed rate for drill cutting in a range not to cause the tap portion to reach the workpiece, i.e., within a range of the drill length L; and (b) a thread cutting step causing the drill blades to cut the prepared hole while continuously causing the thread cutting blades to cut the internal thread on an inner circumferential wall of the prepared hole by performing synchronized driving the tap with drill at a rotational speed and a feed rate for tapping to move forward by one lead of the internal thread to be cut per one revolution. Further, the thread cutting step may be preferably conducted while supplying cutting oil via the oil holes under an oil pressure equal to or less than 2MPa. Preliminary provision of the guide hole results in an effect of suppressing the occurrence of positional displacement or inclination of the internal thread regardless of eccentricity between the center S1 of the hole-as-cast and the tapping center S2, thereby enabling the internal thread to be cut at increased precision. However, no guide hole processing step may be conducted depending on processing conditions and the thread cutting step may be directly conducted to cut the internal thread.

### Embodiment

Now, an embodiment of the present invention will be described below in detail with reference to the accompanying drawings.

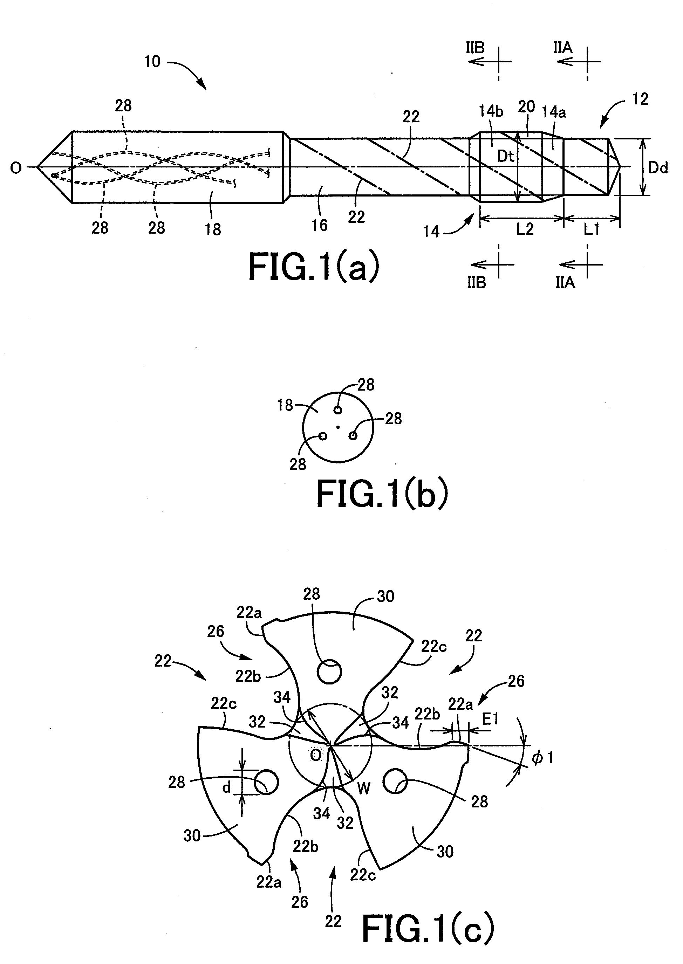

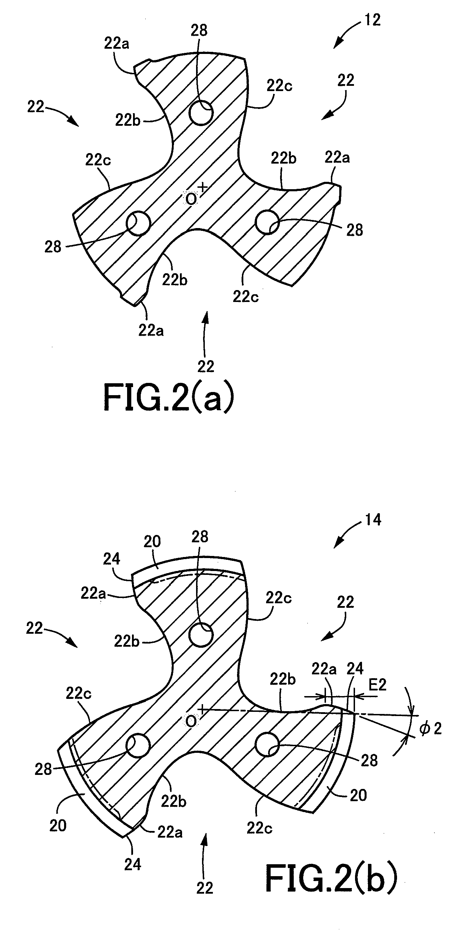

FIG.1(a) is a schematic front view of a tap with drill 10 of one embodiment according to the present invention as viewed in a direction perpendicular to the center axis "O"; FIG. 1(b) is an end view of the tap as viewed from a shank 18 located on a left side in FIG.1(a); and FIG. 1(c) is en enlarged end view of a drill end portion as viewed from a leading end placed on a right side. Further, FIG. 2 depicts enlarged views of the tap with drill 10 in cross portion perpendicular to the center axis "O". FIG. 2(a) depicts a fragmentary view of a portion taken on arrow IIA-IIA in FIG. 1(a), i.e., a cross-sectional view of a drill portion 12, and FIG. 2(b) depicts a fragmentary view of a portion taken on arrow IIB-IIB in FIG. 1(a), i.e., a cross-sectional view of a tap portion 14.

The tap with drill 10, including the drill portion 12, the tap portion 14, a neck portion 16 and the shank 18 in an order from the leading end in an axial direction to be contiguous in a coaxial relationship, is integrally made of cemented carbide with DLC coating made as a hard film in areas except for the shank 18. With the tap with drill 10 useful for right-hand thread cutting, the tap portion 14 is formed with a right-hand external thread 20, corresponding to an internal thread to be cut, and includes three chip discharge grooves 22 similarly fluted clockwise in a way to divide the external thread 20 with three thread cutting edges 24 (see FIG. 2(b)) being formed along the chip discharge grooves 22, respectively. The tap portion 14 includes a front chamfered thread portion 14a, in which the thread cutting edges 24 gradually decrease in diameter, and a complete thread portion 14b in which the thread cutting edges 24 are fixed in diameter. An outer diameter of the complete thread portion 14b is a tap diameter Dt. The external thread 20, corresponding to an internal thread to be cut, is M8×1.25 in the present embodiment and has a tap diameter Dt of approximately 8.2mm and a tap length L2 of six ridges (7.5mm) in the present embodiment of which 1.5 ridges form the chamfered thread portion 14a. A single dot line, depicted in FIG. 2(b) in the vicinity of a root of the external thread 20, is depicted for comparison in shape with the drill portion 12 in FIG. 2(a). In addition, none of various parts in the drawings is necessarily and accurately described in terms of dimensional percentages and angles, etc.

The three chip discharge grooves 22 are formed in a way to extend from the leading end of the drill portion 12 to areas in front of the shank 18 with the same leads at equiangular intervals (of intervals at 120°) with respect to each other about the center axis. The drill blades 26 are formed in areas, at which the chip discharge grooves 22 are opened to a conical leading end portion of the drill portion 12, for cutting a prepared hole when drivably rotated clockwise as viewed from the shank 18. A drill diameter Dd, representing a diametric dimension of the drill portion 12, is sized to be nearly equal to an inner diameter of the internal thread to be cut, i.e., nearly equal to a root diameter of the external thread 20 of the tap portion 14, to be about 6.6mm in the present embodiment. More particularly, the external thread 20 has the root diameter of approximately 6.65mm to be slightly greater than the drill diameter Dd with the root portions of the thread cutting edges 24 arranged to cut the inner diameter of the internal thread in the present embodiment. Moreover, a drill length L 1 extending from a front end of the tap portion 14 to the leading end of the drill portion 12 is made equal to or less than 1Dt with respect to a tap diameter Dt to be approximately 6mm in the present embodiment. The neck portion 16 is made nearly equal in diameter to the drill diameter Dd.

The chip discharge grooves 22 are formed on the complete thread portion 14b of the tap portion 14 with fixed leads at fluted angles ranging from 20° to 50° to be in the order of approximately 30° in the present embodiment. Further, the tap with drill 10 have three oil holes 28 formed in fluted patterns with the same leads as the chip discharge grooves 22. The oil holes 28 extend through the interior of the tap with drill 10 in areas from an end face of the shank 18 to the leading end of the drill portion 12 over entire lengths thereof to be independent from each other to be opened at relief surfaces 30 of the three drill blades 26, respectively. The oil holes 28 have diameters "d" in a range of 0.6mm to 1.0mm to fall in the order of about 0.7mm in the present embodiment.

The chip discharge grooves 22 are formed in fixed fluted cross-sectional shapes in an overall flute length inclusive of the drill portion 12 and the tap portion 14 such that: negative lands 22a are swelled into the flutes to be negative in radial rake angle ϕ1 of outer circumferential portions of the drill blades 26 in a bottom view as viewed from a tool end, i.e., under a state shown in FIG. 1(c); while radial rake angles ϕ2 (see FIG. 2(b)) of the thread cutting edges 24 are negative in cross section perpendicular to the center axis "O". The radial rake angles ϕ1 of the drill blades 26 are equal to or greater than -20° and a negative angle range E1 is equal to or less than 0.1Dd with respect to the drill diameter Dd in terms of a linear distance in a direction oriented from an outer circumferential corner to the center axis "O" to fall in the order of 0.05Dd in the present embodiment. Within the negative angle range E 1, the drill blades 26 are formed in shapes curved in smoothly convexed configurations protruding in a tool rotating direction, i.e., in a counter-clockwise direction about the center axis "O" as viewed in FIG 1(c). The radial rake angles ϕ1 are smallest at an outer circumferential corner (being in a negative direction) and gradually increase (negative value to 0°) toward the center axis "O" (toward the tool end). The radial rake angles ϕ1, shown in FIG. 1(c), represent angles of outermost circumferential corners whose radial rake angles ϕ1 fall in a range expressed as -20° ≤ φ1 < 0° to be in the order of -10° in the present embodiment. The negative lands 22a are suitably arranged in shape depending on shapes of the drill blades 26.

The radial rake angles ϕ2 of the thread cutting edges 24 are different more or less from the radial rake angles ϕ1 of the drill blades 26, owing to an angle of the leading end of the drill portion 12 and differences in the diametrical dimensions Dd and Dt of the drill portion 12 and the tap portion 14, but nearly equal to the radial rake angles ϕ1 of the drill blades 26 at the outer circumferential corners thereof. The negative lands 22a are determined in shape such that both of the radial rake angles ϕ1 of the drill blades 26 at the outer circumferential corners thereof and ϕ2 of the thread cutting edges 24 fall in negative angles equal to or greater than -20°. The thread cutting edges 24 have rake surfaces in negative angle ranges E2 that are greater than a negative angle range E1 of the drill blades 26 by an amount in which the tap diameter Dt is greater than the drill diameter Dd.

Further, the chip discharge grooves 22 include concaved circular arc contours 22b that are contiguous with the negative lands 22a, respectively, and smoothly concaved in areas opposite to the tool rotating direction in the cross section perpendicular to the center axis "O", i.e., in a clockwise direction about the center axis "O" in FIGS. 2(a) and 2(b). The concaved circular arc contours 22b are formed in nearly fixed curvatures with each radius having a circular arc shape whose radius falls in a range of 0.19Dd to 1.1 Dd with respect to the drill diameter Dd and selected to be in the order of 0.23dD in the present embodiment. This allows the drill blades 26 to have areas closer to the center axis "O" than the negative angle ranges E1 in which the radial rake angle ϕ1, defined by the negative lands 22a, are negative in the bottom view as viewed from the tool end. These areas are formed in concaved circular arc shapes, smoothly concaved in sides opposite to the tool rotating direction in association with the concaved circular arc contours 22b, in smooth connection to the negative angular portions on the outer circumferential sides.

Furthermore, the chip discharge grooves 22 have heel-facing wall surfaces 22c formed in convexed circular arc shapes smoothly swelled into the respective grooves in a groove cross-sectional shape perpendicular to the center axis "O" such that both of the drill portion 12 and the tap portion 14 reach the heels.

Meanwhile, thinnings 32 are provided on the leading end of the drill in the vicinity of the center axis "O" such that thinning blades 34 are provided in ways to reach the vicinity of the center axis "O". Thus, the drill blades 26 take the form of structures including the thinning blades 34. The thinning blades 34 have axial rake angles that smoothly and continuously increase (to be negative → positive) toward junction areas away from the center axis "O" to be smoothly connected to the concaved circular arc contours to fall in a range of -5° to 0° in areas closest to the center axis "O" but in a range of 0° to + 15° at junctions with the chip discharge grooves 22, i.e., junctions with the concaved circular arc contours of the drill blades 26.

Further, the tool end has a core thickness W falling in a range of 0.25Dt to 0.33Dt with respect to the tap diameter Dt. The core thickness W represents a groove root diameter of the chip discharge grooves 22 in a leading end portion of the tool. The chip discharge grooves 22 can be provided in a way to form a backward taper in which the groove root diameter gradually decrease toward the shank 18 at a certain gradient. In the illustrated embodiment, however, the chip discharge grooves 22 are provided with the same fixed groove root diameter as the core diameter W over entire lengths of the chip evacuation grooves 22.

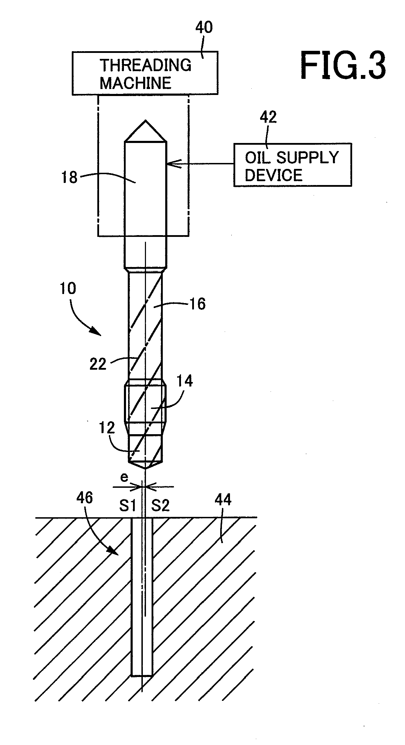

The tap with drill 10 is mounted on a spindle of, for instance, a threading machine 40 comprised of an NC machining center or the like as shown in FIG. 3 in use and an oil supply device 42 supplies the three oil holes 28 with cutting oil material (coolant) at a given oil supply pressure depending on needs. The threading machine 40 is able to independently control a rotating speed and a feed rate of the tap with drill 10 respectively. Performing synchronized driving of the tap with drill 10 at the rotating speed and the feed rate for moving the same forward by one lead of an internal thread to be cut per one revolution allows the preceding drill portion 12 to cut a prepared hole in a workpiece 44 while consecutively causing the thread cutting edges 24 of the tap portion 14 to efficiently cut an internal thread on an inner circumferential wall of the prepared hole. Chips pass through the chip discharge grooves 22 fore discharge with cutting oil material, supplied to the tool end via the oil holes 28, toward the shank 18.

FIG. 3 represents a case where the workpiece 44 is made of cast metal in which a bottomed hole-as-cast 46 is formed by casting under which an internal thread is cut. In such a case, the hole-as-cast 46 is poor in dimensional precision and positional precision due to solidification contraction, etc., occurred during casting. This makes it difficult to cut the internal thread with higher positional precision by tapping the hole-as-cast 46 intact with the use of a tap. Therefore, the hole-as-cast 46 is formed to be smaller, upon which the internal thread is cut by allowing the tap with drill 10 to cut the prepared hole in line with a targeted tapping center S2 at a position decentered from a center S1 of the hole-as-cast 46. That is, the internal thread is cut for the bottomed hole-as-cast 46 whose diameter is smaller than the diameter of the prepared hole which is nearly equal to the drill diameter Dd while cutting the prepared hole, completely inclusive of the hole-as-cast 46, at a targeted center position pointed on the tapping center S2 at the position decentered from the center S1 of the hole-as-cast 46 by a predetermined decentered dimension "e".

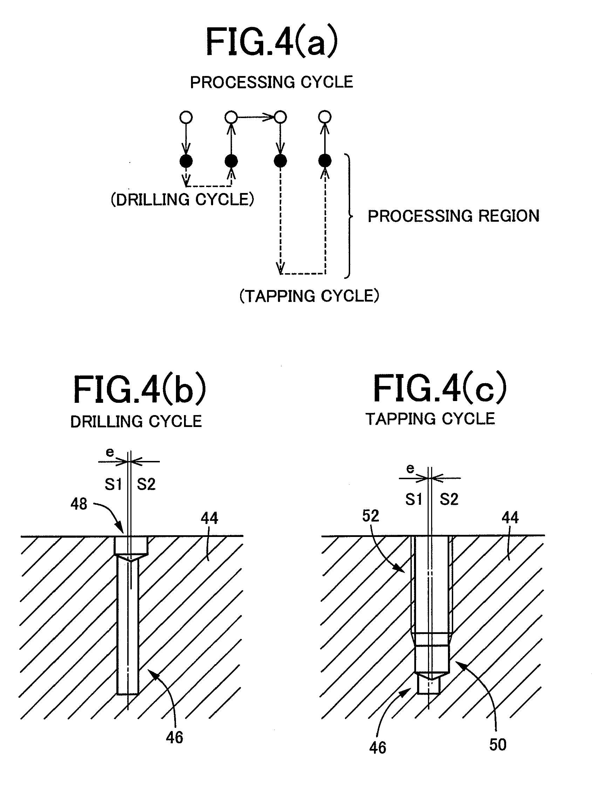

In such a case, it becomes possible to perform synchronized driving of the tap with drill 10 for the hole-as-cast 46 to cut the prepared hole while cutting the internal thread at once. In the illustrated embodiment, as shown in FIG. 4, a guide hole 48 is preliminarily formed in a drilling cycle, after which a tapping cycle is carried out to cut a prepared hole 50 while cutting an internal thread (threaded hole) 52. The drilling cycle includes a guide hole forming step in which the tap with drill 10 is driven at a rotating speed and a feed rate in amounts suited for drilling step within a range not to cause the tap portion 14 to reach the workpiece 44, i.e., a range of the drill length L1 such that the drill blades 26 cut the guide hole 48. The guide hole 48 is formed so as to completely cover the hole-as-cast 46. In addition, the tapping cycle includes a thread cutting step in which the synchronized driving of the tap with drill 10 is performed at a rotating speed and a feed rate specified for tapping work to move forward by one lead of the internal thread to be cut per one revolution upon which the drill blades 26 cut the prepared hole 50 while causing the thread cutting edges 24 to cut the internal thread 52 on the prepared hole 50 at an inner circumferential surface thereof. In the present embodiment, the oil supply device 42 supplies cutting oil under an oil supply pressure in the order of approximately 1 MPa during both the drilling cycle and the tapping cycle for performing cutting work.

The rotating speed and the feed rate for the drilling cycle are suited for the drill portion 12 to perform hole cutting work and the rotating speed is made faster than the rotating speed of the tapping cycle while the feed rate is made slower than the rotating speed of the tapping cycle. This allows the guide hole 48 to be cut at an increased precision regardless of the occurrence of eccentricity between the center S1 of the hole-as-cast 46 and the tapping center S2; while suppressing the occurrence of positional displacement or inclination of the internal thread 52 on a subsequent tapping cycle whereby the internal thread 52 can be cut at a highly increased cutting precision. The guide hole 48 substantially performs as the prepared hole 50.

Further, a view on cutting cycle in FIG. 4(a) merely shows that the tap with drill 10 is displaced in a lateral direction (rightward in the drawing) with a view to illustrating vertical movements of the tap with drill 10 in comparison during the drilling cycle and the tapping cycle and does not mean an effect of lateral movements. That is, the tap with drill 10 is subjected to vertical movements at the fixed targeted center position pointed on tapping center S2. Moreover, a symbol "○" means that the tap with drill 10 is extracted upward away from the workpiece 44 during air cutting while meaning that cutting work is conducted in areas lower than a symbol "•". However, the drilling cycle is followed by the tapping cycle, without causing the tap with drill 10 to be extracted from the workpiece 44 at once between the drilling cycle and the tapping cycle, in which the rotating speed and the feed rate are altered in sequence to the drilling cycle.

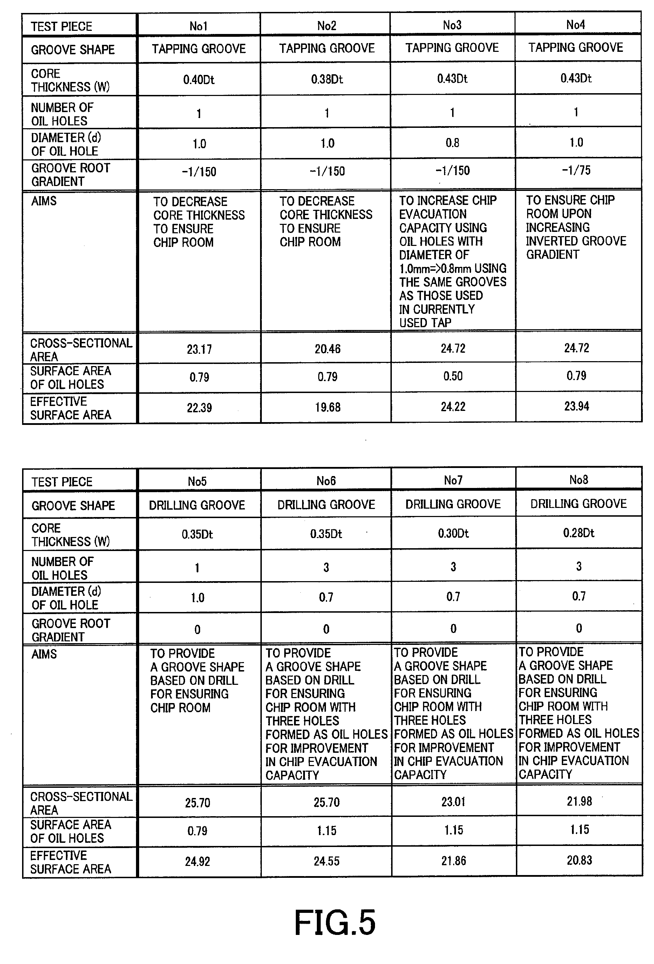

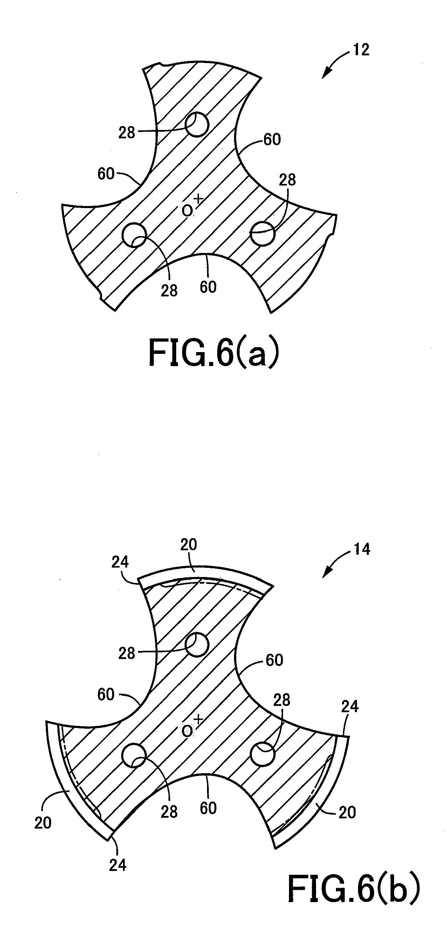

Eight kinds of taps with drill of test pieces No. 1 to No. 8, shown in FIG. 5, were prepared and performance tests were conducted with internal thread cutting conducted during the drilling cycle and the tapping cycle in combination as shown in FIG. 4 under test conditions expressed below for cutting threaded holes (internal threads 52) in five holes, respectively, with results being described. The test pieces No. 1 to No. 8 had the same basic parameters as those of the drip and tap 10 of the present embodiment and had three blades with a nominal size of M8×1.2d5, a tap diameter Dt of approximately 8.2mm and a drill diameter Dd of approximately 6.6mm. The test pieces No. 7 and No. 8 represent precuts of the present invention and corresponds to the tap with drill 10 of the present embodiment. A distinction between "Tap Groove" and "Drill Groove", listed in a column "Groove Shape" in FIG. 5, is determined depending on whether a groove is closer to a groove of a usual tap or a groove of a drill. More particularly, "Drill Groove" includes the negative lands 22a and the concaved circular arc contours 22b like those of the chip discharge grooves 22 of the present embodiment while having heel-facing wall surfaces 22c formed in convexed circular arc shapes as well as the core thickness W being relatively small to be equal to or less than 0.35Dt. "Tap Groove" has the same simple concaved circular arc contours as those of the usual tap in groove sectional shape like the chip discharge grooves 60 shown in FIG. 6 while having the core thickness W being equal to or greater than 0.35Dt. Those of which "Oil Hole Number" is "1" represent structures in which a straight single oil hole is formed up to a tool end portion in concentric relation to the center axis "O" and has a leading end trifurcated to be opened at only three relief surfaces 30 of the drill blades 26. "Groove Root Gradient" is indicated such that the closer to the shank 18, the less will be the backward taper in a value of "-" (minus). "Cross-sectional Area" represents a value covering thread ridges of the external thread 20 of the tap portion 14 and a surface area, obtained when subtracting "Oil hole Area" from "Cross-sectional Area", represents "Effective Area".

«Test Conditions»
Workpiece: ADC 12 (JIS Standard; Aluminum Alloy Die Cast)
Cutting Speed in Drilling Cycle: 82.9m/min(4000min⁻¹)
Feed Rate in Drilling Cycle: 0.15mm/rev
Cutting Speed in Tapping Cycle: 50m/min(2000min⁻¹)
Feed Rate in Tapping Cycle: 1.25mm/rev(In Feed rate Feed)
Diameter of Prepared Hole: φ4.5
Depth of Prepared Hole: 32mm (Blind)
Eccentricity in Dimension (e): 0.7mm
Depth of Guide Hole: 3mm
Tapping Length: 24mm(Blind)
Tool Protrusion Length: 50mm
Cutting Oil: Water-soluble Cutting Oil
Oil Supply Method: Inside Supply Oil (under 1MPa)
Used Machine: Vertical Machining Center

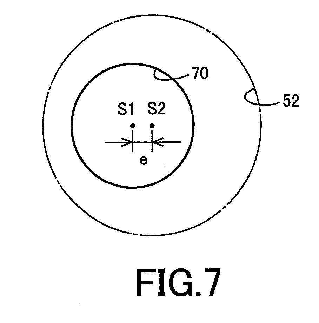

The "Prepared Hole", listed in the Test Conditions described above, is the one that corresponds to the hole-as-cast 46 described above and preliminarily formed by drilling with its diameter being smaller than the drill diameters Dd (6.6mm in this case) of the test pieces No. 1 to N0. 8; and the internal threads 52 were cut under eccentricity by Eccentricity Dimension (e). FIG. 7 is a view, showing the positional relationship for the prepared hole 70 to be tapped, in which the internal thread 52 was cut with the tapping center S2 placed on a target center position decentered from the center S1 of the prepared hole 70 only by the eccentricity dimension "e" in the same manner as the case in which the hole-as-cast 46 was tapped in FIG. 4. "Tool Protruding Length", representing a dimension between a front end of the shank 18 and a leading end of the drill portion 12, corresponds to the maximum cutting depth for the workpiece 44 and "Threading Depth" represents a threading length that is a product obtained by subtracting the chamfered portion 14a of the thread portion 14.

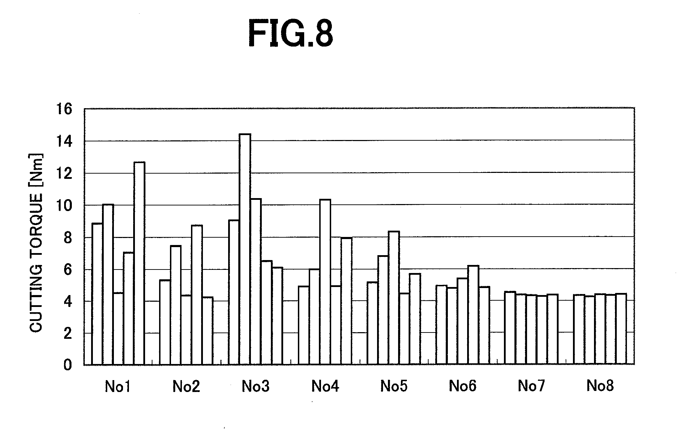

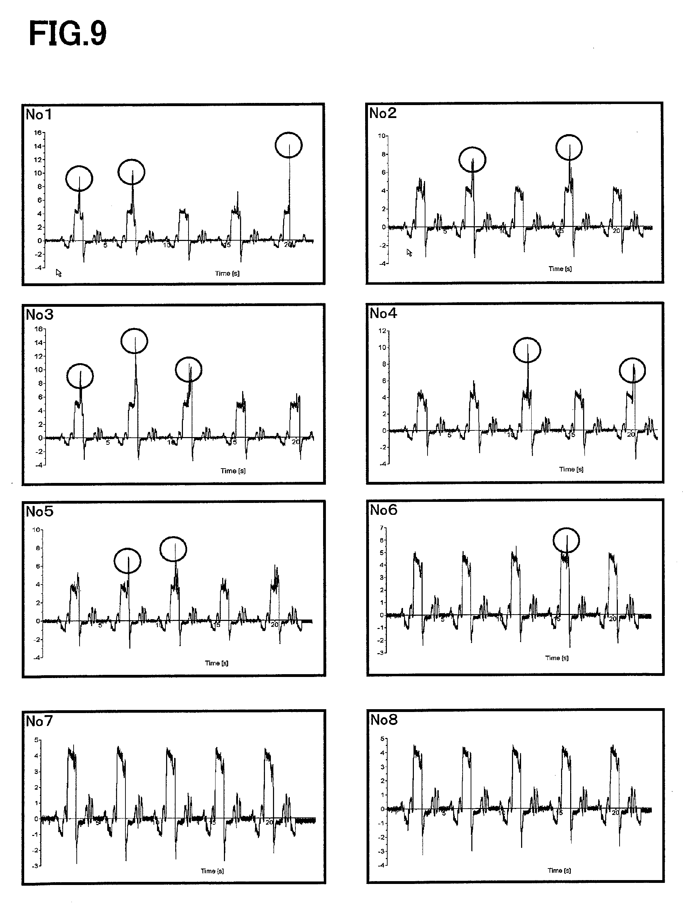

FIG. 8 represents the maximum values of cutting torques appearing when five holes were cut to form the internal threads 52 for the eight test pieces No. 1 to No. 8 and FIG. 9 shows actual waveforms of cutting torques. The test pieces No. 7 and No. 8, implementing the present invention, had cutting torques for all of the five holes with the maximum values being less than 5Nm in the absence of increased variations to be nearly fixed in stability, resulting in a capability of thread cutting at high precision and increased durability. Portions, marked in a symbol "o" in FIG. 9, represents portions in which cutting torques suddenly increase due to chip clogging or the like with a resultant likelihood of fractures of tools or damages to thread cutting edges 24 and the drill blades 26 or the like while having likelihood of adversely affecting threading precision of the internal thread 52.

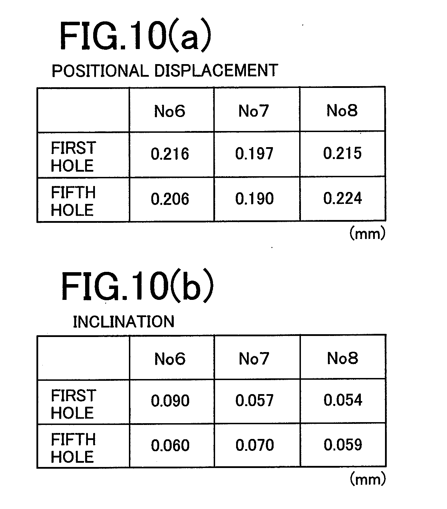

FIG. 10 shows results on checking the occurrence of positional displacements and inclinations caused in a first hole and a fifth hole formed in the five holes of the internal threads 52 formed by current test cutting for three kinds of the test pieces No. 6 to No. 8 that were relatively favorable in cutting torques. The positional displacements and inclinations were measured on an exccentric amount (displacement from the target center position S2) at a predetermined position protruding from the internal thread 52 in threading engagement between a rod, having a leading end formed with an external thread, and the internal thread 52. The positional displacement represents the eccentric amount checked at a position of a height of 24mm from an opening portion of the internal thread 52. In addition, the inclinations represent differences of eccentric amounts on the eccentric amounts measured at height positions of 5mm and 24mm from an opening portion of the internal thread 52. From these results, all of the positional displacements are equal to or less than 0.3mm and all of the inclinations are equal to or less than 0.1mm, with all of the parameters falling in an allowable range with no problem being present.

Thus, with the taps with drill 10 of the present embodiment, i.e., the test pieces No. 7 and No. 8, the prepared hole 50 was cut by the drill blades 26 under a condition decentered from the hole-as-cast 46 and, in consecutive sequence, the internal thread 52 was cut by the thread cutting edges 24. When this takes place, even if the oil supply pressure of cutting oil, supplied from the oil holes 28, were lowered to be equal to or less than 2MPa (1MPa in the present embodiment), chips can be favorably evacuated via the chip discharge grooves 22. This results in improvement of chip clogging effects, while suppressing the occurrence of fractures of the drill blades 26 and the thread cutting edges 24 and damage to the tool or the like with a resultant capability of obtaining durability (tool life) that can be satisfactory in actual practice.

That is, the drill blades 26 and the thread cutting edges 24 are comprised of three blades provided in three pieces, respectively. This allows chips to be dispersed in three chip discharge grooves 22 with resultant improvement in chip evacuating performance. In addition, the core thickness W is smaller than that of the tap to fall in a value ranging from 0.25Dt to 0.33Dt but greater than a usual drill of two blades. This ensures a predetermined rigidity and strength while further improving chip evacuating performance. Moreover, with the three oil holes 28 formed in an axial direction so as to open at the relief surfaces 30 of the three drill blades 26 respectively, the oil holes 28 are capable of increasing an overall flowing sectional area ensuring the predetermined rigidity and strength of the, tool. This enables a large amount of cutting oil to be supplied even in the presence of an oil supply pressure remained in a relatively low level and, in this respect, chip evacuating performance can be improved. In addition, the chip discharge grooves 22 are formed with the negative lands 22a swelled into the respective grooves and all of the radial rake angle ϕ1 of the outer circumferences of the drill blades 26 and the radial rake angle ϕ2 of the thread cutting edges 24 are made negative with resultant increases in cutting blade strengths of the drill blades 26 and the thread cutting edges 24. Thus, owing to such synergy effects, it is conceived that even if cutting oil is lowered in supply pressure to be equal to or less than 2MPa as mentioned above, the prepared hole 50 can be cut in a decentered state with respect to the hole-as-cast 46 and, in consecutive step, the internal thread 52 can be cut in practice.

With the present embodiment, further, the chip discharge grooves 22 have the concaved circular arc contours 22b, respectively, in groove sectional configurations perpendicular to the center axis "O". The concaved circular arc contours 22b are contiguous with the negative lands 22a, respectively, and smoothly concaved in directions opposite to the tool rotating direction. In contrast, the drill blades 26 have the concaved circular arc contours, formed in areas closer to the center axis "O" than the negative angle portions formed by the negative lands 22a, which are smoothly concaved in directions opposite to the tool rotating direction. This facilitates the curling of the chips to curl to be easily fragmented with resultant improvement in chip evacuating performance. In addition, the drill blades 26 have elongated cutting edges longer in length than straight cutting edges with a resultant effect of dispersing cutting load. This improves durability of the drill blades 26 and the drill blades 26, having a relatively large feed rate per one revolution, comes to an effect of further appropriately cutting the prepared hole 50 during tapping cycle.

With the present embodiment, furthermore, the chip discharge grooves 22 have the heel-facing wall surfaces 22c formed in the convexed circular arc contours smoothly swelled into the respective grooves. This ensures chip rooms (flowing sectional areas) for evacuating the chips and increases rigidity and strength of the lands of the drill portion 12 and the tap portion 14, while suppressing the occurrence of breakdown of the heel portions during a motion to extract the tool upon reversely rotating the same after completed work on the internal thread 52.

With the present embodiment, moreover, the oil holes 28 have the diameter "d" in a value ranging from 0.6mm to 1.0mm, it becomes possible to increase the overall amount of cutting oil to be supplied through the three oil holes 28 while enhancing predetermined tool rigidity and strength.

With the present embodiment, besides, the guide hole 48 is preliminarily formed during the drilling cycle and, thereafter, the tapping cycle is conducted to cut the prepared hole 50 while simultaneously cutting the internal thread (threaded hole) 52. This enables the drilling cycle to be conducted to perform the cutting work at a rotating speed and a feed rate suited for boring work of the drill portion 12. This enables the guide hole 48 to be cut at high precision regardless of eccentricity between the center S1 of the hole-as-cast 46 and the tapping center S2. The presence of such a guide hole 48 suppresses the positional displacement of the internal thread 52, formed in the subsequent tapping cycle, and the occurrence of inclination, thereby enabling the internal thread 52 to be cut at increased precision.

While the embodiment of the present invention has been described above in detail with reference to the accompanying drawings, it is intended that the present invention described be considered only as illustrative of one embodiment and that the present invention may be implemented in various modifications and improvements based on knowledge of those skilled in the art.

According to the tap with drill of the present invention, the prepared hole was cut under a condition decentered from the hole-as-cast and, in consecutive sequence, the internal thread was cut. When this takes place, even if the oil supply pressure of cutting oil, supplied from the oil holes, were lowered to be equal to or less than 2MPa, chips can be favorably evacuated. This results in improvement of chip clogging effects, while suppressing the occurrence of fractures of the drill blades and the thread cutting edges and damage to the tool or the like with a resultant capability of obtaining durability (tool life) that can be satisfactory in actual practice. That is, according to the tap with drill of the present invention, the prepared hole can be cut by the drill blade and, contiguously, the internal thread can be efficiently cut by the thread cutting edge. It is preferably applied not only in the technical field of cutting the internal thread, but also, especially, in the technical field in which it is difficult to supply the cutting oil in a high pressure when the internal thread is cut under a condition decentered from the hole-as-cast.

## Claims

1. A tap with drill comprising:
a drill portion including a plurality of chip discharge grooves, formed about a center axis "O" and fluted in the same direction as a thread of an internal thread to be cut, and the drill portion having drill blades for cutting a prepared hole, formed in areas at which the chip discharge grooves are opened to a tool end;
a tap portion for cutting the internal thread on an inner circumferential surface of the prepared hole formed by the drill blades, including an external thread corresponding to the internal thread to be formed, and thread cutting edges formed along the chip discharge grooves to be contiguous with the drill portion in a way to split the external thread, the tap portion being integrally disposed concentrically with the drill portion; and
oil holes integrally formed on a coaxial relationship and longitudinally extending through the tap portion and the drill portion so as to open at relief surfaces of the drill blades;
the chip discharge grooves being formed in three at equiangular intervals about the center axis "O"; the drill blades and the thread cutting edges include three blades formed along the chip discharge grooves, respectively; and the oil holes are helically formed in three with the same leads as the chip discharge grooves and opened at the relief surfaces of the drill blades, respectively;
the chip discharge grooves straddling the drill portion and the tap portion in fixed groove sectional shapes and having negative lands swelled into grooves such that, in a bottom view when viewed from the tool end, both of radial rake angles ϕ1 of outer circumferential portions of the drill blades and radial rake angles ϕ2 of the thread cutting edges in cross section perpendicular to the center axis "O" become negative; and
the tool end having a core thickness W falling in a value ranging from 0.25Dt to 0.33Dt with respect to a tap diameter Dt representing an outer diameter of the tap portion.

2. The tap with drill according to claim 1, wherein:
the chip discharge grooves include concaved circular arc contour portions extending to be contiguous with the negative lands and smoothly concaved in directions opposite to a tool rotating direction in a cross section perpendicular to the center axis "O"; and
the drill blades have areas, closer to the center axis "O" than negative angular portions in which the radial rake angles ϕ1, defined by the negative lands on the bottom view as viewed from the tool end, become negative, are formed in concaved circular arc contours smoothly concaved in directions opposite to the tool rotating direction in association with the concaved circular arc contour portions of the chip discharge grooves.

3. The tap with drill according to claim 1 or 2, wherein:
the chip discharge grooves have wall surfaces formed in convexed circular arc contours smoothly swelled into grooves on heel side.

4. The tap with drill according to any one of claims 1 to 3, wherein:
the oil holes have a diameter "d" equal to or less than 1mm.

5. The tap with drill according to any one of claims 1 to 4, wherein:
the tap with drill is applied for performing cutting work on a bottomed hole-as-cast formed in a cast metal and smaller in diameter than a diameter of the prepared hole corresponding to an outer diameter of the drill blades under which the blind hole is cut in size completely covering the hole-as-cast with a center on a tapping center S2 in position decentered from a center S1 of the hole-as-cast while forming an internal thread.
